# EUROPEAN PATENT APPLICATION

(11) **EP 4 286 424 A1**
(43) Date of publication of application: **06.12.2023**
(21) Application number: 23175938.2
(22) Date of filing: 30.05.2023
(51) Int. Cl.: C08F 8/44, C08F 8/12

(54) **ETHYLENE ALKYL ACRYLATE-BASED COPOLYMER IONOMER AND MANUFACTURING METHOD THEREOF**

(30) Priority: 31.05.2022 KR 20220066579
(71) Applicant: SK Innovation Co., Ltd., Seoul 03188 (KR); SK Geo Centric Co., Ltd., Jongno-gu Seoul 03161 (KR)
(72) Inventor: LEE, Sang Yeup, 34124 Daejeon (KR); KWON, Soon Min, 34124 Daejeon (KR); KIM, Ki Yup, 34124 Daejeon (KR)
(74) Representative: Frick, Robert

(57) **Abstract**

The present invention relates to an ethylene alkyl acrylate-based copolymer ionomer and a preparation method thereof. The preparation method includes: (a) preparing a mixture by mixing (1) an ethylene-based copolymer selected from an ethylene alkyl acrylate copolymer and an ethylene alkyl methacrylate copolymer, the ethylene-based copolymer having a melt index of 1 to 500 g/10 min as measured according to ASTM D1238 (190°C, 2,16 kg), and (2) an alkali metal salt; and (b) heating the mixture to a melting temperature of the ethylene-based copolymer of 100 to 400°C and stirring the heated mixture to introduce a substituent of an acrylic acid salt or a methacrylic acid salt into the copolymer.

## Description

### TECHNICAL FIELD

The present invention relates to an ethylene alkyl acrylate-based copolymer ionomer and a preparation method thereof.

### BACKGROUND

The resin composition containing an ethylene-unsaturated carboxylic acid-based copolymer and an ionomer thereof has excellent adhesion to metal and glass, transparency, mechanical strength, resilience, etc., and therefore has been used for various purposes, including building materials such as interior and exterior materials for automobiles and floor materials, films and sheets for miscellaneous goods, etc. In addition, an ethylene-unsaturated carboxylic acid-based copolymer and an ionomer thereof are often used in combination with other components depending on the application or required physical properties.

In general, the ionomer collectively refers to a polymer containing an ionic bond structure generated through a kind of acid-base reaction between a carboxylic acid residue and a metal ion contained in the polymer. The ionomer may be prepared by copolymerization of a monomer containing a carboxylic acid group and an ethylene-based monomer, and typically, the ethylene-based copolymer containing a carboxylic acid group is polymerized through a high-pressure reactor. However, when a high-content of carboxylic acid group-containing monomers is copolymerized in the high-pressure reactor, it is difficult to increase the molecular weight of the copolymer. Further, it is difficult to control a polymerization rate due to a high content of carboxylic acid group, and side reactions may occur during polymerization due to a high reactivity of the carboxylic acid. Furthermore, there is a limit in that the content of the carboxylic acid group may not be increased beyond a certain amount due to trouble with a high-pressure compressor during high-pressure polymerization.

It is difficult to increase a content of the carboxylic acid group in the ionomer to a certain level or more by the conventional polymerization method using the high-pressure reactor, and even if a copolymer containing a high content of carboxylic acid group is polymerized, it is difficult to obtain a high molecular weight polymer and is difficult to use industrially due to high cost and low yield.

Accordingly, there is a need for research on a new preparation method of an ionomer capable of preparing the ionomer containing a high content of carboxylic acid group at a low cost and with high economic efficiency.

### SUMMARY

The problem to the solved by the present invention providing a ionomer preparation method for preparing a high-content carboxylic acid-based ionomer at a low cost and high efficiency. Further, the invention aims to providing an ionomer resin having a high weight average molecular weight while having a high content of carboxylic acid group.

Against this background, the invention provides a preparation method of an ionomer including: (a) preparing a mixture by mixing (1) an ethylene-based copolymer selected from an ethylene alkyl acrylate copolymer and an ethylene alkyl methacrylate copolymer, the ethylene-based copolymer having a melt index of 1 to 500 g/10 min as measured according to ASTM D1238 (190°C, 2,16 kg), and (2) an alkali metal salt; and (b) heating the mixture to a melting temperature of the ethylene-based copolymer of 100 to 400°C and stirring the heated mixture to introduce a substituent of an acrylic acid salt or a methacrylic acid salt into the copolymer.

The ethylene-based copolymer may have a melt index of 1 to 150 g/10 min as measured according to ASTM D1238 (190°C, 2,16 kg) .

The alkali metal salt may contain a metal hydroxide.

The ethylene-based copolymer may contain 1.0 mol% or more of repeating units of the acrylic acid salt and the methacrylic acid salt.

The ethylene-based copolymer may contain 1.5 mol% or more of repeating units of the acrylic acid salt and the methacrylic acid salt.

The ionomer may have a melt index as measured according to ASTM D1238 (190°C, 2.16 kg) of 100 g/10 min or less.

The ionomer may have a melt index as measured according to ASTM D1238 (190°C, 2.16 kg) of 1 g/10 min or less.

The alkyl in the ethylene alkyl acrylate copolymer or the ethylene alkyl methacrylate copolymer may be C₁-C₁₀.

The ethylene-based copolymer may contain 1 to 50 mol% of the alkyl acrylate repeating unit or the alkyl methacrylate repeating unit in the copolymer.

The ethylene-based copolymer may contain 10 mol% or more of a second repeating unit, based on the total of a first repeating unit including the alkyl methacrylate and the alkyl acrylate and the second repeating unit including the methacrylic acid salt and the acrylic acid salt.

In the step (b), melting and stirring may be performed in a reaction extruder.

In the step (b), a melting temperature may be 150 to 350°C.

A residence time of the reaction extruder may be 5 minutes or more.

The alkali metal hydroxide may be mixed with an alcohol-based solvent.

The ionomer may not contain acrylic acid or methacrylic acid.

In another general aspect, there is provided an ionomer prepared from the preparation method as described above.

### DETAILED DESCRIPTION OF EMBODIMENTS

Hereinafter, an ethylene alkyl acrylate-based copolymer ionomer and a preparation method thereof according to the present invention will be described in detail.

Units used herein are based on weight, unless otherwise specified. For example, the unit of % or ratio means % by weight or ratio by weight, and % by weight means % by weight of any one component in the total composition, unless otherwise defined.

Conventional ionomers have been prepared by polymerization in a high-pressure reactor, but it was difficult to increase the content of carboxylic acid groups in the ionomer to a certain level or more, and even if a copolymer containing a high content of carboxylic acid groups is polymerized, it was difficult to obtain a high molecular weight polymer, and it was difficult to use industrially due to a high cost and a low yield.

The present invention aims to provide a method for preparing an ionomer from a commonly used ethylene alkyl acrylate-based copolymer resin in order to solve the above problems.

Against this background, the present invention provides a preparation method of an ionomer including: (a) preparing a mixture by mixing an ethylene-based copolymer selected from an ethylene alkyl acrylate copolymer and an ethylene alkyl methacrylate copolymer having a melt index of 1 to 500 g/10 min as measured according to ASTM D1238 (190°C, 2,16 kg), and an alkali metal hydroxide; and (b) melting at 100 to 400°C and stirring the mixture to introduce a substituent of an acrylic acid salt or a methacrylic acid salt into the copolymer.

The preparation method does not require preparing an ethylene-based copolymer resin containing carboxylic acid under high-pressure reaction conditions, and may thus provide an ionomer from relatively inexpensive raw materials with high economic efficiency. In addition, the preparation method is very simple because the ionomer is prepared by simply performing the reaction at a melting temperature of the ethylene-based copolymer resin without additional additives to provide the ionomer. In addition, it is possible to provide an ionomer containing a high content of carboxylic acid group, which is difficult to achieve in conventional methods for preparing an ionomer, and a high molecular weight ionomer in which the content of the carboxylic acid salt may be freely adjusted.

In an embodiment, the ethylene-based copolymer may have, but is not limited to, a melt index of 1 to 500 g/10 min, specifically 1 to 200 g/10 min, specifically, 1 to 150 g/10 min, specifically 1 to 100 g/10 min, and specifically 1 to 5 g/10 min as measured according to ASTM D1238 (190°C, 2,16 kg) .

In an embodiment, the ethylene-based copolymer may contain, but is not limited to, 1.0 mol% or more, specifically 1.5 mol% or more, specifically, 1.5 mol% to 50 mol%, and specifically 3 mol% to 30 mol% of repeating units of an acrylic acid salt and a methacrylic acid salt.

The ionomer may have, but is not limited to, a melt index as measured according to ASTM D1238 (190°C, 2.16 kg) of 100 g/10 min or less, specifically, 10 g/10 min or less, specifically, 5 g/10 min or less, specifically 1 g/10 min or less, specifically 0.01 to 1 g/10 min, and specifically 0.3 to 0.7g/10min as measured according to ASTM D1238 (190°C, 2,16 kg).

The alkyl in an embodiment, in the ethylene alkyl acrylate copolymer or the ethylene alkyl methacrylate copolymer may be C₁-C₁₀, specifically C₂-C₈, specifically C₃-C₇, specifically C₃-C₆, and specifically C₃-C₄. As the alkyl in the ethylene-based copolymer is C₃-C₄, the alkyl group is easily separated and the ethylene-based copolymer may be easily prepared as an ionized resin. In addition, the separated C₃-C₄ alkyl is preferred because it may be converted to propanol or butanol and then easily vaporized and removed from the reactor because its boiling point is lower than the melting and stirring temperatures.

Specifically, the acrylic acid-based comonomer included in the ethylene-based copolymer may be any one or a mixture of two or more selected from methyl methacrylate, methyl acrylate, ethyl acrylate, ethyl methacrylate, propyl acrylate, propyl methacrylate, butyl acrylate, butyl methacrylate, pentyl acrylate, pentyl methacrylate, cyclohexyl acrylate, cyclohexyl methacrylate, n-hexyl acrylate, and n-hexyl methacrylate, specifically any one or a mixture of two or more selected from propyl acrylate, propyl methacrylate, butyl acrylate, and butyl methacrylate, and specifically any one or a mixture of two or more selected from butyl acrylate and butyl methacrylate.

The ethylene-based copolymer may be polymerized by including ethylene and acrylate-based monomers. A method for preparing the ethylene-based copolymer may be selected without limitation as long as it is a commercial polymerization method, and the method may be, for example, bulk polymerization, suspension polymerization, solution polymerization, etc., and specifically, solution polymerization.

For example, the solution polymerization may be performed by adding ethylene, an acrylate-based polymer, and a polymerization initiator to a polymerization solvent. If necessary, polymerization may be polymerized by further adding a metal oxide in the polymerization reaction. The metal oxide may act as a Lewis acid to further facilitate the polymerization, and the metal oxide may be recovered and recycled again.

As the metal oxide, alkaline earth metals, transition metals, group 13 and group 14 metal oxides, etc. are preferable. Specific examples of the metal oxide may be, but are not limited to, at least one selected from the group consisting of aluminum oxide (Al₂O₃), yttrium oxide (Y₂O₃), zinc oxide (ZnO₂), hafmium oxide (HfO₂), silicon oxide (SiO₂), boron oxide (B₂O₃), cesium oxide (CeO₂), dysprosium oxide (Dy₂O₃), erbium oxide (Er₂O₃), europium oxide (Eu₂O₃), gadolinium oxide (Gd₂O₃), holmium oxide (Ho₂O₃), lanthanum oxide (La₂O₃), lutetium oxide (Lu₂O₃), neodymium oxide (Nd₂O₃), praseodymium oxide (Pr₆O₁₁), samarium oxide (Sm₂O₃), terbium oxide (Tb₂O₃), thorium oxide (Th₄O₇), thulium oxide (Tm₂O₃), ytterbium oxide (Yb₂O₃), tin oxide (SnO), titanium oxide (TiO₂), dysprosium aluminate (Dy₃Al₅O₁₂), yttnium aluminate (Y₃Al₅O₁₂), aluminum titanate (Al₂O_{3.}TiO₂), aluminum silicate (3Al₂O_{3.}2SiO₂), calcium titanate (CaTiO₃), calcium zirconate (CaZrO₃), iron titanate (FeTiOs), magnesium aluminate (MgO.Al₂O₃), cesium aluminate (CeAl₁₁O₁₈), aluminum sulfate (Al₂(SO₄)₃), and aluminum phosphate (AlPO₄).

The metal oxide may be used, but is not limited to, in a molar ratio of 0.1 to 10, and specifically 0.1 to 1 based on 1 mole of the acrylate-based comonomer.

As the polymerization solvent, aromatic solvents, aliphatic solvents, ether-based solvents, halogenated alkyl solvents, etc. may be used without limitation. Examples of the polymerization solvent may include, but are not limited to, one or more solvents or a mixed solvent selected from the group consisting of toluene, chlorobenzene, n-hexane, n-heptane, tetrahydrofuran, chloroform, and methylene chloride. The polymerization solvent may be used, but is not limited to, in an amount of 300 to 5,000 parts by weight, and specifically 1,500 to 2,500 parts by weight based on 100 parts by weight of the acrylate-based comonomer.

As the polymerization initiator, a known radical polymerization initiator may be used without limitation. Examples of polymerization initiators may include, but are not limited to, peroxides, azo compounds, or mixtures thereof. The polymerization initiator may be used, but is not limited to, in a molar ratio of 0.001 to 1.0, and specifically 0.01 to 0.1 based on 1 mole of the acrylic acid-based comonomer.

The polymerization may be performed, but is not limited to, at a pressure of 1 to 200 atm and a temperature of 30 to 150°C, specifically, at a pressure of 1 to 5 atm and a temperature of 50 to 120°C.

According to an embodiment, the ethylene alkyl acrylate copolymer or the ethylene alkyl methacrylate copolymer may have, but is not limited to, a weight average molecular weight of 100,000 to 5,000,000 g/mol, specifically 150,000 to 3,000,000 g/mol, specifically 200,000 to 2,000,000 g/mol, and specifically 300,000 to 1,000,000 g/mol.

An ionomer may be prepared by adding an alkali metal salt to the ethylene-based copolymer, and melting and stirring the resulting mixture. The alkyl methacrylate and alkyl acrylate group of the ethylene-based copolymer may be substituted with a methacrylic acid salt or an acrylic acid salt by reacting with metal hydroxides in a high-temperature molten state.

The alkali metal salt may be, but is not limited to, any one alkali metal salt selected from alkali metal hydroxide and alkali metal carbonate, and may specifically be alkali metal hydroxide.

In an embodiment, the alkali metal hydroxide may be, for example, potassium hydroxide, sodium hydroxide, and lithium hydroxide, etc., and specifically sodium hydroxide. The sodium hydroxide has a relatively low melting temperature, so that the mixture may be melted and mixed very uniformly during melting and stirring, and accordingly, the content of the acrylic acid salt or methacrylic acid salt of the ionomer may be increased.

In an embodiment, the ethylene-based copolymer may contain, but is not limited to, 10 to 90 mol%, specifically 10 to 70 mol% and, specifically 10 to 50 mol% of the alkyl acrylate repeating unit or the alkyl methacrylate repeating unit in the copolymer.

In an embodiment, the ethylene-based copolymer may contain 10 mol% or more, specifically 10 mol% to 100 mol%, and specifically 10 mol% to 50 mol% of a second repeating unit, based on the sum of a first repeating unit including the alkyl methacrylate and the alkyl acrylate and the second repeating unit including the methacrylic acid salt and the acrylic acid salt. As the second repeating unit corresponding to the carboxylic acid salt in the ionomer is included in less than 100 mol%, and specifically 10 mol% to 50 mol% based on the sum of the first and second repeating units, the ionomer may be preferable in that it may have relatively low hardness properties that are difficult to achieve in conventional ethylene-acrylic acid-based ionomers.

Meanwhile, since the degree of substitution of alkyl methacrylate and alkyl acrylate with a methacrylic acid salt and an acrylic acid salt is proportional to an amount of metal hydroxide added, the mol% of the second repeating unit may be easily controlled according to the amount of metal hydroxide added. That is, as the amount of metal hydroxide added increases, the amount of substitution of the alkyl methacrylate and the alkyl acrylate with the methacrylic acid salt and the acrylic acid salt increases. Thus, the preparation method of an ionomer according to the present invention has the advantage of easily providing an ionomer containing a desired amount of methacrylic acid salt and acrylic acid salt.

In an embodiment, in the step (b), melting and stirring may be performed in a reaction extruder.

In addition, in an embodiment, in the step (b), the melting temperature may be, but is not limited to, 120 to 350°C, specifically 150 to 300°C, and specifically 180 to 250°C.

In particular, in the temperature range of 180 to 250°C, yellowing due to the ionomer reaction may be suppressed without thermal decomposition of the ethylene-based copolymer.

In an embodiment, the residence time of the reaction extruder may be, but is not limited to, 5 minutes or more, specifically 5 minutes to 30 minutes, and specifically 10 minutes to 20 minutes.

In addition, it may be provided by adding it in the form of a master batch during the melting. As it is added in the form of the master batch, it may be mixed very uniformly.

In an embodiment, the alkali metal hydroxide may be a mixed solution mixed with an alcohol-based solvent. Rather than directly adding the alkali metal hydroxide in a powder state, the ethylene-based copolymer and the alkali metal hydroxide may be more uniformly mixed by mixing a mixed solution dissolved in an alcohol-based solvent with the ethylene-based copolymer. The alcohol-based solvent is not limited thereto, but may be, for example, a glycol-based compound, and specifically any one or two or more alcohol-based solvents selected from ethylene glycol, diethylene glycol, triethylene glycol, 1,2-propylene glycol, 1,3-propylene glycol, dipropylene glycol, and butylene glycol.

In addition, the alkali metal hydroxide of the mixed solution may be mixed at a concentration of 50 wt% or less, specifically 10 wt% to 40 wt%, and specifically 20 wt% to 30 wt%.

The present invention also relates to an ionomer prepared from the preparation method according to the invention.

The ionomer may have a weight average molecular weight of, but is not limited to, 10,000 to 5,000,000 g/mol, specifically 20,000 to 3,000,000 g/mol, specifically 30,000 to 2,000,000 g/mol, and specifically 50,000 to 1,000,000 g/mol.

According to the present invention, by using the commercially available ethylene-based copolymer instead of the acrylic acid-based copolymer, a preparation coast of an ionomer is significantly reduced, and ionomers of various grades may be provided without being limited by weight average molecular weight or melt index, and thus ionomers having desired processability, excellent mechanical properties, etc. may be provided.

In addition, the ionomer according to the present invention is an ionomer that does not contain acrylic acid or methacrylic acid, and has a lower hardness compared to conventional ionomers containing acrylic acid or methacrylic acid. The acrylic acid or methacrylic acid induces a hydrogen bond to give the ionomer high hardness, but the ionomer according to the present invention does not contain acrylic acid or methacrylic acid, and thus may have a unique low hardness.

In addition, an ionomer according to the present invention has a small agglomeration effect of metal ions and acrylate, thereby having an excellent adhesive effect when used as an adhesive.

The ionomer according to the present invention may preferably be included as a material for a multi-layered golf ball structure. Specifically, the multi-layer golf ball may include a cover layer, an intermediate layer, and a core layer, and the ionomer may be included as a material for an intermediate layer. The ionomer according to the present invention has lower hardness and superior adhesiveness than the acrylic acid-based ionomer prepared from a conventional high-pressure reactor, and thus may impart excellent durability to a golf ball even against physical impact.

Hereinafter, embodiments of the present invention will be described in more detail on the basis of Examples and Comparative Examples.

### [Physical properties measurement]

### 1. Melt index measurement

It was measured according to an ASTM D1238 standard measurement method (190°C, 2,16 kg).

### 2. Acrylate content and ionomer content measurement

The acrylate content and the ionomer content were measured using ¹³C-NMR and FT-IR.

### 3. Shore hardness measurement

It was measured according to an ASTM D2240 standard measurement method. Shore hardness is measured using Shore D hardness tester by overlapping five 4 cm x 4 cm sheets with a thickness of 1 mm stored in a 20°C thermostat for 1 hour or more. When a surface is pressed with a needle of the hardness tester, a hardness value of a gauge reaches a maximum value and then decreases and stabilizes. At this time, the maximum value was set as a hardness value.

### [Example 1]

0.63 g of sodium hydroxide (NaOH, Aldrich) per 100 g of ethylene butyl acrylate copolymer resin (melting index (190°C, 2.16 kg) 40 g/10 min, butyl acrylate content: 10.5 mol%, SKFP Lotryl 35BA40) was added to a twin-screw reaction extruder and melt-extruded at 180°C at 300 rpm. Butyl alcohol generated during the reaction was removed through a vacuum suction device installed at a rear end of the extruder. The extruded molten polymer strand was cooled in a cooling water bath, transferred to a pelletizer, cut and made into a uniform pellet.

### [Example 2]

1.7 g of sodium hydroxide (NaOH, Aldrich) per 100 g of ethylene butyl acrylate copolymer resin (melting index (190°C, 2.16 kg) 40 g/10 min, butyl acrylate content: 10.5 mol%, SKFP Lotryl 35BA40) was added to a twin-screw reaction extruder and melt-extruded at 180°C at 300 rpm.

### [Example 3]

Example 3 was carried out in the same manner as in Example 2, except that melt extrusion was performed by adding 100 g of propylene glycol in which sodium hydroxide was dissolved at a concentration of 16 wt% instead of sodium hydroxide.

### [Comparative Example 1]

0.67 g of sodium hydroxide (NaOH, Aldrich) per 100 g of acrylic acid copolymer resin (melting index (190°C, 2.16 kg) 250 g/10 min, 9.1 mol% of acrylic acid) was added to a twin-screw reaction extruder and melt-extruded at 180°C at 300 rpm. Moisture generated during the reaction was removed through a vacuum suction device installed at the rear end of the extruder. The extruded molten polymer strand was cooled in a cooling water bath, transferred to a pelletizer, cut and made into a uniform pellet.

### [Comparative Example 2]

0.91 g of sodium hydroxide (NaOH, Aldrich) per 100 g of acrylic acid copolymer resin (melting index (190°C, 2.16 kg) 60 g/10 min, 5.7 mol% of acrylic acid) was added to a twin-screw reaction extruder and melt-extruded at 180°C at 300 rpm. Moisture generated during the reaction was removed through a vacuum suction device installed at the rear end of the extruder. The extruded molten polymer strand was cooled in a cooling water bath, transferred to a pelletizer, cut and made into a uniform pellet.

**[Table 1]**

| | Melt index of ionomer (g/10 min) as measured according to ASTM D1238 | Acrylate repeat unit (mol%) | Acrylic acid salt content of ionomer (mol %) | Hardness [shore D] |
|---|---|---|---|---|
| Example 1 | 0.6 | 10.5 mol% | 1.57 mol% | - |
| Example 2 | Not measurable | 10.5 mol% | 4.2 mol% | 35 |
| Example 3 | Not measurable | 10.5 mol% | 9 mol% | |
| Comp. Example 1 | 49 | 9.1 mol% | 1.68 mol% | - |
| Comp. Example 2 | 2.4 | 5.7 mol% | 2.28 mol% | 66 |

As shown in Table 1, ethylene butyl acrylate copolymers or ionomers derived from ethylene butyl acrylate copolymers were prepared through the ionomer preparation method of the present invention.

The ionomer according to the examples is an ionomer that does not contain acrylic acid, which cannot be conventionally prepared, and accordingly, an ionomer with a lower hardness than an ionomer containing conventional acrylic acid or methacrylic acid may be prepared.

Specifically, from the hardness of Example 2 and Comparative Example 2 it is confirmed that the hardness of Comparative Example 2 is 1.8 times higher than that of Example 2.

According to the present invention, an ionomer resin may be provided by a simple process using a low-cost, general-purpose acrylic acid-based copolymer.

In addition, according to the present invention, it is possible to provide an ionomer containing a high content of carboxylic acid group, which is difficult to achieve in conventional methods for preparing an ionomer, and a high molecular weight ionomer in which the content of the carboxylic acid group may be freely adjusted.

In addition, according to the present invention, it is possible to easily provide an ionomer having ductility and excellent mechanical properties.

## Claims

1. A method for preparing an ionomer, the method comprising:
(a) preparing a mixture by mixing (1) an ethylene-based copolymer selected from an ethylene alkyl acrylate copolymer and an ethylene alkyl methacrylate copolymer, the ethylene-based copolymer having a melt index of 1 to 500 g/10 min as measured according to ASTM D1238 (190°C, 2,16 kg), and (2) an alkali metal salt; and
(b) heating the mixture to a melting temperature of the ethylene-based copolymer of between 100 to 400°C and stirring the heated mixture to introduce a substituent of an acrylic acid salt or a methacrylic acid salt into the copolymer.

2. The method of claim 1, wherein ethylene-based copolymer has a melt index of 1 to 150 g/10 min as measured according to ASTM D1238 (190°C, 2,16 kg).

3. The method of any preceding claim, wherein the alkali metal salt contains a metal hydroxide.

4. The method of any preceding claim, wherein the ethylene-based copolymer contains 1.0 mol% or more of repeating units of the acrylic acid salt and the methacrylic acid salt.

5. The method of claim 4, wherein the ethylene-based copolymer contains 1.5 mol% or more of repeating units of the acrylic acid salt and the methacrylic acid salt.

6. The method of any preceding claim, wherein the alkyl in the ethylene alkyl acrylate copolymer or the ethylene alkyl methacrylate copolymer is C₁-C₁₀.

7. The method of any preceding claim, wherein the ethylene-based copolymer contains 1 to 50 mol% of the alkyl acrylate repeating unit or the alkyl methacrylate repeating unit in the copolymer.

8. The method of any preceding claim, wherein the ethylene-based copolymer contains 10 mol% or more of a second repeating unit, based on the total of a first repeating unit including the alkyl methacrylate and the alkyl acrylate and the second repeating unit including the methacrylic acid salt and the acrylic acid salt.

9. The method of any preceding claim, wherein in the step (b), a melting temperature is 150 to 350°C.

10. The method of any preceding claim, wherein a residence time of the reaction extruder is 5 minutes or more.

11. The method of any preceding claim, wherein the alkali metal hydroxide is mixed with an alcohol-based solvent.

12. An ionomer prepared by the preparation method of any one of the preceding claims.

13. The ionomer of claim 12, wherein the ionomer has a melt index as measured according to ASTM D1238 (190°C, 2.16 kg) of 100 g/10 min or less.

14. The ionomer of claim 13, wherein the ionomer has a melt index as measured according to ASTM D1238 (190°C, 2.16 kg) of 1 g/10 min or less.

15. The ionomer of any one of claims 12 to 14, wherein the ionomer does not contain acrylic acid or methacrylic acid.
